# FASCICULE DE BREVET EUROPEEN

(11) **EP 2 160 093 B1**
(45) Date de publication et mention de la délivrance du brevet: **24.09.2014**
(21) Numéro de dépôt: 08826473.4
(22) Date de dépôt: 17.06.2008
(51) Int. Cl.: A01K 11/00

(54) **BOUCLE AURICULAIRE DE MARQUAGE AVEC DISPOSITIF DE PRELEVEMENT DE TISSUS**
MARKIERUNGSOHRMARKE MIT EINER GEWEBEENTNAHMEVORRICHTUNG
MARKING EAR TAG COMPRISING A TISSUE SAMPLING DEVICE

(30) Priorité: 22.06.2007 FR 0704466
(43) Date de publication de la demande: 10.03.2010
(73) Titulaire: Chevillot Sas, 81011 Albi Cedex 9 (FR)
(72) Inventeur: HILPERT, Jean Jacques, F-35500 Vitre (FR); DECALUWE, Johan, F-53000 Laval (FR)
(74) Mandataire: Ravina, Bernard
(86) Numéro de dépôt international: PCT/FR2008/000841
(87) Numéro de publication internationale: WO 2009/010658

(56) Documents cités:
- WO-A-2006/000869
- WO-A-2007/013820
- DE-A1- 10 115 790

## Description

La présente invention appartient au domaine du marquage des animaux à l'aide de dispositifs assurant l'inviolabilité et la traçabilité.

Elle concerne une boucle d'oreille pour l'identification d'un animal conçue pour permettre le prélèvement d'un échantillon de tissus par assemblage d'un dispositif de conservation d'un échantillon biologique au moment de l'application de la boucle sur l'animal. Ce dispositif, qui permet de conserver et d'analyser ultérieurement l'échantillon prélevé, est également un objet de la présente invention. Le système de prélèvement est conçu de sorte que l'échantillon soit facilement manipulable et accessible pour son analyse.

Durant les dernières années, l'identification des animaux de rente comme les bovins, les ovins ou les porcins, est devenu obligatoire dans de nombreuses régions du monde. Ceci est généralement effectué en appliquant une boucle d'oreille sur une seule ou les deux oreilles de l'animal, ladite boucle d'oreille portant un numéro qui permet une identification individuelle de chaque animal. De nombreux types de boucles existent, qui comprennent toutes une partie femelle ou de réception et une partie mâle ou de perçage. Lors de la pose, l'oreille de l'animal est placée entre la partie mâle et la partie femelle qui sont ensuite assemblées à travers l'oreille de l'animal en utilisant une pince adaptée. Une fois en place, la boucle d'oreille doit être impossible à enlever, afin d'empêcher la fraude. A cet effet, un certain nombre de mécanismes de verrouillage ont été imaginés pour permettre une parfaite rétention de la partie mâle dans la partie femelle une fois que la boucle a été posée sur l'oreille de l'animal. Par exemple, les brevets EP 0177201, EP 0913083, WO 95/25426 et EP 1037525 décrivent des mécanismes de verrouillage prenant la forme d'anneaux de rétention, de lamelles de rétention et/ou de clips qui maintiennent la partie mâle dans la partie femelle une fois que la boucle a été assemblée.

Par ailleurs, il devient de plus en plus important d'être à même non seulement d'identifier un animal par le biais du numéro d'identification marqué sur la boucle, mais également de prélever sur l'animal portant ladite boucle un échantillon de matière biologique afin que l'on puisse associer lors d'une étape ultérieure les caractéristiques biologiques/biochimiques de l'échantillon en question avec l'animal sur lequel l'échantillon a été prélevé.

Le document EP1014861 décrit un outil de prélèvement d'échantillon de matière biologique et une capsule munie d'un couvercle. Le conteneur d'échantillon et le couvercle de capsule font partie d'une boucle d'oreille qui est posée en même temps que l'échantillon est introduit dans le conteneur et le couvercle refermé sur celui-ci. La capsule de test ainsi formée porte les mêmes informations écrites que la boucle d'oreille ainsi posée mais peut en être séparée. L'échantillon contenu dans la capsule est ensuite envoyé vers un laboratoire en vue de réaliser des tests visant à déterminer si l'animal concerné est infecté par une certaine maladie ou immunisé.

EP 1088212 décrit un outil servant à prélever et préparer un échantillon de matière biologique pour réaliser une analyse de biologie moléculaire. L'outil est doté d'un conteneur d'échantillon et d'un moyen de prélèvement d'échantillon, moyen qui pénètre dans le conteneur d'échantillon après avoir procédé au prélèvement et ferme le conteneur de manière étanche. A l'intérieur du conteneur d'échantillon se trouvent des moyens de préservation de l'échantillon contre les enzymes dégradant l'ADN. Le moyen de prélèvement d'échantillon est enfoncé à travers l'oreille de l'animal puis dans le conteneur d'échantillon qui est lui-même associé à une boucle d'oreille comprenant une plaque avec poinçon et une plaque avec ouverture. Le conteneur d'échantillon est placé sans fixation à la plaque avec ouverture et peut donc être retiré une fois que l'échantillon a été prélevé, alors que la boucle d'oreille reste sur l'oreille de l'animal.

EP 1372379 décrit une boucle d'oreille pour identifier les animaux avec un mécanisme de prélèvement d'échantillon biologique. Dans cette boucle d'oreille, la partie mâle est conçue en deux éléments séparables. Le premier de ces éléments demeure dans la partie femelle de la boucle d'oreille une fois que celle-ci a été posée, alors que l'autre élément est utilisé pour prélever un échantillon de matière biologique et peut être déplacé dans le premier élément.

L'inconvénient des dispositifs décrits dans les documents EP1014861 et EP1088212 est que les échantillons ainsi produits doivent être stockés de manière fiable et étanche dans les capsules de test respectives. Les analyses à réaliser ultérieurement par un laboratoire demandent une procédure compliquée d'ouverture de la capsule de test bien fermée. Cela requiert notamment l'application d'une force importante ou l'utilisation de matériels spécifiques à cette opération, ce qui rend l'opération longue et pénible.

En outre, avec la capsule fermée décrite par EP 1014861 et EP 1088212, il n'est véritablement pas possible de voir si un échantillon a été effectivement et correctement collecté tant que la capsule n'a pas été ouverte. Une fois qu'elle est ouverte, des manipulations délicates et nombreuses sont nécessaires, effectuées par un opérateur ou à l'aide d'un équipement exclusif dédié à ces seules opérations.

Le document WO2006/000869 A2 décrit une boucle d'oreille pour identifier un animal suivant le préambule de la revendication indépendante 1 et un dispositif de conservation d'un échantillon prélevé sur l'oreille d'un animal lors de la pose de ladite boucle d'identification suivant le préambule de la revendication indépendante 12.

En conséquence, un objectif de la présente invention est de proposer une boucle auriculaire qui permette le prélèvement d'un échantillon de matière biologique et facilite le traitement ultérieur dudit échantillon. Par ailleurs, un objectif de la présente invention est de proposer une boucle d'oreille qui permette l'assemblage d'un dispositif de prélèvement et de conservation d'un échantillon de tissu qui soit compatible avec le matériel utilisé couramment en laboratoire. Est également un objectif de la présente invention de proposer un dispositif de conservation d'un échantillon biologique qui permette une manipulation plus aisée et qui s'adapte par conséquent plus facilement aux différentes procédures de laboratoire.

Les objectifs de la présente invention sont atteints grâce à une boucle d'oreille pour identifier un animal, suivant la revendication 1, comprenant une partie mâle et une partie femelle destinées à être assemblées par emboîtement irréversible de part et d'autre de l'oreille dudit animal,
- ladite partie mâle comprenant une base et une tige constituant une extension de ladite base, ladite tige possédant une tête amovible dont la partie distale est creuse et est dotée d'une arête tranchante apte à sectionner un échantillon de matière biologique lorsque ladite tête perfore l'oreille de l'animal,
- ladite partie femelle comportant un conduit central apte à recevoir ladite tête et au moins partiellement ladite tige lors de la pose de la boucle d'oreille, ledit conduit étant associé à un conteneur d'échantillon détachable placé dans le prolongement axial dudit conduit, ledit conteneur ayant à son extrémité proximale une première ouverture apte à recevoir la tête de ladite tige lors de la pose de la boucle d'oreille,
ladite boucle d'oreille étant caractérisée en ce que ledit conteneur comporte à son extrémité distale une seconde ouverture consistant en un orifice ouvert donnant accès à l'espace intérieur dudit conteneur d'échantillon.

Les inventeurs ont en effet mis en évidence qu'en fournissant une boucle d'oreille avec une partie femelle comprenant un conteneur d'échantillon détachable, lequel comprend une ouverture additionnelle, la manipulation et l'analyse ultérieures de l'échantillon sont grandement facilitées. L'ouverture additionnelle permet un travail direct sur l'échantillon à l'intérieur du conteneur d'échantillon sans avoir à extraire l'échantillon dudit conteneur.

Selon l'invention, la tête est amovible. Elle peut être fixée de manière lâche ou simplement posée sur la tige : elle est alors placée manuellement au sommet de la tige, avant la pose de la marque sur l'oreille de l'animal. Elle peut aussi, de manière connue, être pré-montée sur la tige, avec un point de rupture entre la tige et la tête. Ce point de rupture peut prendre la forme d'une portion de matériau fragilisée entre la tige et la tête, par exemple grâce à une section plus faible. L'arête tranchante de la tête est alors le point le plus proéminent de la partie mâle et par conséquent c'est elle qui vient perforer les tissus lorsque la partie mâle est assemblée avec la partie femelle sur l'oreille de l'animal, le fragment ainsi découpé restant dans la partie creuse de ladite tête. C'est la raison pour laquelle la tête représente le véritable outil de prélèvement de l'échantillon de matière biologique. Une fois que la tête et la tige de la partie mâle ont traversé l'oreille de l'animal, la tête, par la pression exercée, pénètre par la première ouverture dans le conteneur d'échantillon et se désolidarise de la tige, comme il sera expliqué en détail plus loin.

Dans un mode de réalisation de la boucle selon l'invention, la tête adopte la forme d'une capsule dont la partie proximale est obturée par un fond et dont la partie distale dotée de ladite arête tranchante, est un orifice ouvert. Lorsque la tête traverse l'oreille de l'animal, le fragment de tissus qui est sectionné est ainsi recueilli dans la partie cylindrique de la tête.

Dans un mode de réalisation de la boucle selon l'invention, l'orifice ouvert de la partie distale de la tête est placé dans le même axe que le conteneur d'échantillon. Il est donc placé dans l'alignement de celui-ci, ce qui permet d'accéder aisément à l'échantillon recueilli, directement depuis la seconde ouverture, à travers le conteneur.

L'arête tranchante, dont le fil définit la limite dudit orifice ouvert de la partie distale de la tête, peut adopter la forme d'un cercle, d'une ellipse, d'un carré, d'un triangle, d'un rectangle, d'un octogone ou d'un autre polygone. La géométrie de l'arête détermine ainsi la forme et la taille de l'échantillon de matière biologique prélevé.

Dans un mode de réalisation particulier de la boucle selon l'invention, l'orifice de la partie distale de la tête a une surface supérieure à celle de la seconde ouverture du conteneur d'échantillon. La taille de l'échantillon est alors supérieure à la seconde ouverture du conteneur, de sorte que l'échantillon de matière biologique ne puisse pas tomber dudit conteneur d'échantillon après le prélèvement.

Dans un autre mode de réalisation particulier de la boucle selon l'invention, la seconde ouverture du conteneur d'échantillon et l'orifice de la partie distale de la tête ont une surface identique ou approximativement identique. L'ouverture peut alors être maximale et suffisamment importante pour permettre l'analyse de l'échantillon à l'intérieur du conteneur, par exemple avec l'utilisation de réactifs sur cet échantillon, tels que des réactifs de lyse de cellules, ou pour le traitement enzymatique de l'échantillon, l'amplification nucléique, le dessèchement ou encore en vue du traitement thermique.

Dans un mode de réalisation préféré de la boucle selon l'invention, la paroi interne de l'extrémité proximale du conteneur et la paroi externe de la partie distale de la tête ont une conformation complémentaire, de sorte que ladite extrémité proximale du conteneur et ladite partie distale de la tête sont aptes à s'emboîter avec un ajustement parfait. Ceci implique qu'elles ont la même forme et la même dimension, sur la longueur où l'emboîtement est réalisé. Ainsi, lorsque la partie mâle de la boucle s'engage dans le conduit central de la partie femelle, l'extrémité de la tige portant la tête détachable rencontre l'extrémité proximale du conteneur d'échantillon. La pression exercée provoque l'insertion de la tête dans le conteneur à travers ladite extrémité proximale. Ladite tête et ladite extrémité proximale s'adaptant exactement l'un à l'autre, elles s'emboîtent avec un ajustement parfait. Une poussée supplémentaire provoque l'avancée de la tige jusqu'à sa position de verrouillage et l'éjection du conteneur qui se détache en emportant la tête.

Le terme "ajustement parfait" utilisé ici fait référence au fait que les deux pièces s'emboîtent au plus près sans laisser d'espace entre leur paroi, une légère pression suffisant à surmonter les forces de friction. Dans un mode de réalisation différent, on peut toutefois utiliser des moyens de rétention, comme une ou plusieurs languettes, qui permettent l'entrée de la tête dans la première ouverture du conteneur d'échantillon mais empêchent sa sortie une fois qu'elle se trouve à l'intérieur.

Dans un mode de réalisation commun de la boucle selon l'invention, la tête peut adopter la forme d'une capsule cylindrique et l'arête tranchante est circulaire.

De même, le conteneur d'échantillon peut adopter la forme générale d'un cylindre comprenant ladite première ouverture à son extrémité proximale et ladite seconde ouverture à son extrémité distale. La première ouverture et la seconde ouverture sont ainsi préférablement situées à chacune des extrémités du conteneur d'échantillon, la première ouverture permettant l'entrée de la tête et par conséquent également de l'échantillon de matière biologique, alors que la seconde ouverture à l'extrémité opposée permet une analyse facilitée de l'échantillon.

Ledit conteneur d'échantillon peut avoir une section droite circulaire sur la totalité de sa longueur, ou bien sur une partie de celle-ci seulement, le restant adoptant une section de forme différente. En particulier, la paroi externe du conteneur d'échantillon peut comporter une partie plane permettant d'inscrire un code ou d'apposer une marque d'identification. Selon une caractéristique préférée de la boucle selon l'invention, la paroi externe du conteneur d'échantillon comporte un méplat apte à recevoir ou à servir de support à un marquage d'identifiant.

La boucle d'oreille est faite dans une matière plastique adaptée, par exemple l'une de celles indiquées dans les documents EP 913803 ou EP 0177201. Le conteneur d'échantillon est également réalisé de préférence en matière plastique, selon les techniques connues de l'homme de l'art, sous réserve des critères ci-après. En effet, selon une caractéristique préférée de la boucle selon l'invention, le conteneur d'échantillon est, au moins en partie transparent. De préférence, il est transparent au moins au niveau de ses parois latérales. Bien entendu, rien ne s'oppose à ce qu'il soit également transparent à l'une et/ou à l'autre de ses extrémités. Ceci est destiné à permettre la vérification de la présence d'un échantillon de matière biologique à l'intérieur dudit conteneur.

Le conteneur d'échantillon peut être réalisé dans un seul matériau possédant les propriétés désirées, ou bien dans deux matériaux différents sélectionnés de manière indépendante. Ainsi, le conteneur d'échantillon peut être réalisée en une ou plusieurs matières plastiques sélectionnées dans le groupe comprenant le polyméthylméthacrylate, le polycarbonate, le polypropylène, le polyéthylène, le polyméthylpentène, le polyéthylène téréphtalique, le polystyrène, le chlorure de polyvinyle et le polyvinyltoluène. Si une partie dudit conteneur est transparente, elle peut être réalisée par exemple en polyméthylméthacrylate, polycarbonate, polypropylène, polyéthylène, polyméthylpentène, ou polyéthylène téréphtalique.

On comprend que le choix du matériau permet de concilier si désiré, l'exigence de transparence et la faculté de marquage. Par exemple, l'extrémité proximale peut être transparente tandis que l'extrémité distale peut servir de support à un moyen d'identification, par exemple par impression par encre ou par laser. Dans une variante de réalisation alternative, seule la seconde ouverture, qui se trouve à l'extrémité distale, est transparente. De la même façon, la tête elle-même peut être transparente, ou au moins en partie transparente, par exemple dans une position permettant une inspection de l'intérieur du tube selon l'axe longitudinal. Selon certains modes de réalisations, la tête peut également avoir une loupe, permettant de vérifier si la présence ou non un échantillon. L'homme de l'art n'aura pas de difficulté à faire son choix parmi les matériaux offerts dans le commerce répondant à ces critères.

Un autre objet de la présente invention concerne un dispositif permettant la conservation, le stockage et la manipulation d'un échantillon biologique. Ce dispositif est obtenu à partir d'éléments constitutifs de la boucle d'identification qui vient d'être décrite, c'est-à-dire par assemblage desdits éléments puis éjection lors de l'installation de l'étiquette auriculaire sur le bétail.

Plus précisément, l'objet de la revendication 12 concerne un dispositif de conservation d'un échantillon biologique prélevé sur l'oreille d'un animal lors de la pose d'une boucle d'identification selon l'invention, comprenant d'une part un conteneur d'échantillon comportant à son extrémité proximale une première ouverture obturée par la partie distale d'une tête creuse contenant ledit échantillon biologique et à son extrémité distale une seconde ouverture consistant en un orifice ouvert donnant accès à l'espace intérieur dudit conteneur d'échantillon, ladite extrémité proximale du conteneur et ladite partie distale de la tête étant emboîtées avec un ajustement parfait, et d'autre part un tube de protection doté d'un couvercle destiné à obturer le col dudit tube, ledit tube étant apte à conserver le conteneur d'échantillon dans un espace clos.

Le tube de protection peut être constitué de tout récipient permettant que l'échantillon soit isolé du milieu extérieur. Il est doté d'un couvercle destiné à obturer le col dudit tube, de sorte que le conteneur dans son intégralité est enfermé dans le tube de protection possédant lui-même des moyens de fermeture. De la sorte, l'échantillon présent dans le conteneur est confiné dans l'espace intérieur du tube de protection, ce qui favorise la protection physique du dispositif de prélèvement en même temps que la conservation de l'échantillon de tissu qu'il renferme.

Selon une caractéristique avantageuse, le dispositif objet de l'invention peut comporter des moyens de maintien en suspension du conteneur d'échantillon à une hauteur intermédiaire dans le tube. Une hauteur intermédiaire est telle que le conteneur ne vient pas en butée contre le fond du tube de protection, mais est retenu par un moyen de suspension, de sorte que le volume intérieur du conteneur (et donc l'échantillon) reste en relation avec l'atmosphère du tube de protection.

Selon un mode de réalisation particulier, lesdits moyens de maintien comprennent une collerette ménagée sur la paroi externe du conteneur, et un épaulement ménagé sur la paroi interne du tube de protection, ladite collerette prenant appui sur ledit épaulement. L'emplacement relatif de la collerette et de l'épaulement est bien entendu adapté pour que le conteneur occupe une position intermédiaire dans le tube. On peut par exemple avoir un épaulement dans la partie haute du tube (à proximité du col) et placer la collerette au niveau de l'extrémité proximale du conteneur d'échantillon. Dans ce cas, lorsque le conteneur d'échantillon est engagé dans le tube, sa seconde ouverture est orientée vers le fond du tube de protection, ainsi que l'orifice de la tête creuse contentant l'échantillon. Pour réaliser les analyses, il conviendra de récupérer le conteneur associé à la tête contenant l'échantillon.

Dans une variante d'exécution particulièrement avantageuse, la collerette est ménagée à l'extrémité distale de la paroi externe du conteneur d'échantillon, c'est-à-dire à proximité de la seconde ouverture permettant l'accès au volume intérieur du conteneur. L'épaulement est dans la partie haute du tube (à proximité du col). Dans cette configuration, lorsque le conteneur d'échantillon est engagé dans le tube de protection, sa seconde ouverture est orientée vers le haut du tube de protection. La tête, qui se trouve dans la partie basse du tube, a son orifice orienté vers le haut : l'échantillon est ainsi accessible directement depuis le col du tube à travers le second orifice du conteneur. On peut ainsi réaliser certaines opérations sans extraire le conteneur du tube. Par ailleurs, toutes les manipulations, traitements et analyses peuvent se faire en plaçant simplement le tube ouvert, ou le conteneur d'échantillon seul, dans un support de laboratoire standard. Un avantage notable de ce mode de réalisation est que l'échantillon qui est encore dans le logement creux de la tête, ne risque pas de tomber de son logement, même si sa taille a diminué par exemple après séchage, contrairement à d'autres systèmes où le dispositif doit être renversé durant les manipulations. La collerette fait éventuellement office de moyen de maintien dans le support de laboratoire.

Selon une caractéristique avantageuse du dispositif objet de l'invention, le tube de protection peut contenir au moins un composé chimique ou biochimique utile pour le traitement de l'échantillon. Par "composé chimique ou biochimique utile pour le traitement de l'échantillon" on entend aussi bien un composé sous forme solide qu'en solution, ce composé pouvant avoir une action de conservation, ou jouer un rôle pour préparer l'échantillon à une analyse, ou même être un réactif nécessaire à une analyse ultérieure.

Selon une caractéristique intéressante de l'invention, le tube de protection contient au moins un composé chimique ou biochimique choisi parmi les agents desséchants, les inhibiteurs de protéases, les enzymes, les fragments d'ADN, les fragments d'ARN. Par exemple, le tube de protection peut contenir, avant même l'introduction du conteneur d'échantillon, des agents chimiques ou des solutions de réactifs utiles pour le traitement ultérieur de l'échantillon, comme par exemple des agents desséchant en vue de la conservation de l'échantillon, des enzymes, des inhibiteurs de protéase, ainsi que des fragments d'ADN, d'ARN ou des agents et enzymes pour procéder à une amplification nucléique,... Ces agents chimiques peuvent être apportés à l'aide d'une matrice, telle qu'une bandelette de papier imprégnée des agents réactifs. Ces matrices peuvent être placées à l'intérieur même du conteneur d'échantillon, dispensant ainsi d'ajouter d'autres agents réactionnels dans le conteneur d'échantillon. De telles matrices sont disponibles par exemple auprès de la société Whatman, sous l'appellation papier FTA^{®}, qui sont décrits avec les technologies associées, dans les brevets américains US 5,496,562, US 5,756,126, US 5,807,527, US 5,972,386 et US 5,985,327.

Dans certaines variantes de réalisation, la tête peut aussi contenir dans la partie creuse qui reçoit l'échantillon, des agents chimiques pour le traitement ultérieur de l'échantillon. Ces agents sont décrits ci-dessus et peuvent être apportés en plus des agents déjà présents dans le conteneur d'échantillon ou en lieu et place de ces derniers. Ils peuvent également être fournis sous forme de matrice, comme décrit ci-dessus.

Dans un mode de réalisation préféré du dispositif selon l'invention, le tube de protection a une conformation externe identique à celle d'un tube standard de laboratoire. Un tel tube de protection peut par exemple être un tube en matière plastique standard de laboratoire, comme un tube Eppendorf, un tube de centrifugation Steiner ou Sorvall. La présente invention permet ainsi une manipulation facile des échantillons de matière biologique prélevés et ne requiert pas de matériel de laboratoire sophistiqué ou très spécialisé, mais peut s'adapter aux équipements de laboratoire existants, déjà communément utilisés dans les laboratoires pour le traitement d'échantillons.

Pour la mise en oeuvre de la boucle d'oreille selon l'invention, on opère comme pour la pose d'une étiquette auriculaire classique sur un animal, le prélèvement de l'échantillon de tissu étant réalisé de manière concomitante sans opération supplémentaire. On procède à l'aide d'une pince conçue à cet effet selon les étapes consistant à :
- apposer la partie mâle et la partie femelle d'une boucle auriculaire comme définie ci-dessus sur l'oreille d'un animal en faisant pénétrer la tige portant la tête dans le cartilage de l'oreille, jusqu'à ce que la tête ait traversé totalement les tissus. Ce faisant, l'arête tranchante à l'extrémité de la tête sectionne un fragment de tissus animal et l'emporte dans l'espace central de la tête. La tête arrive au niveau de la première ouverture à l'extrémité proximale dudit conteneur d'échantillon et s'insère de manière parfaite dans ladite première ouverture, après avoir collecté ledit fragment de tissus constituant un échantillon de matière biologique, qui se trouve maintenant dans ledit conteneur d'échantillon. Le conteneur d'échantillon se détache alors de ladite boucle d'oreille et on récupère le dispositif de conservation de l'échantillon biologique.
- introduire ledit conteneur d'échantillon dans un tube de protection, de manière à protéger ledit échantillon, et le stocker dans les conditions convenables.

De manière optionnelle, on peut procéder à des manipulations supplémentaires de l'échantillon. Si besoin, on retire le conteneur d'échantillon du tube de protection de manière à avoir accès à ladite seconde ouverture et on procède à l'une des opérations suivantes à l'intérieur du conteneur d'échantillon : ajout de réactifs pour un traitement chimique, traitement en solution ou non, dissolution, dessèchement, traitement thermique ou amplification nucléique.

La boucle d'oreille comprenant une partie mâle et une partie femelle peut comporter des moyens d'identification inscrits sur la partie mâle, sur la partie femelle ou sur les deux. Si ces moyens d'identification se trouvent sur la partie mâle, ils sont alors situés préférablement sur la base. S'ils sont sur la partie femelle, celle-ci dispose alors préférablement d'une plaque qui porte ces moyens d'identification. Tous ces moyens d'identification trouvent leur correspondance avec les identifiants imprimés sur le conteneur d'échantillon pour permettre un recoupement entre les boucles et les échantillons, et ainsi le rapprochement entre un échantillon donné et l'animal sur lequel il a été prélevé. De manière additionnelle, la partie femelle peut disposer d'un anneau de rétention, comme par exemple indiqué dans EP 0913083.

L'exemple de réalisation décrit ci-après en détail permettra de mieux comprendre l'invention, sans toutefois en réduire en quelque manière la portée.
La figure 1 représente en coupe une boucle de marquage auriculaire selon l'invention, avant l'assemblage des parties mâle et femelle.
Les figures 2 et 3 représentent en coupe, la même boucle à différentes étapes de l'assemblage des parties mâle et femelle.
La figure 4 est une représentation en perspective écorchée montrant le détail d'un conteneur d'échantillon assemblé avec la tête, avec collerette proximale.
La figure 5 est une représentation en perspective éclatée d'un conteneur d'échantillon, avec méplat latéral et collerette distale.
La figures 6 représente en coupe un conteneur d'échantillon assemblé avec la tête, dans un tube de protection.

Dans le présent exemple, et par référence aux dessins, la boucle 1 comprend la partie mâle 2 et la partie femelle 3, destinées à être assemblées par emboîtement irréversible de part et d'autre de l'oreille d'un animal.

La partie mâle 2 comprend la base 21 et la tige 22 constituant une extension de ladite base. La tige 22 possède la tête 23 qui est amovible, et dont la partie distale 27 est creuse. La tête 23 est dotée de l'arête tranchante 25 apte à sectionner un échantillon de matière biologique lorsque ladite tête perfore l'oreille de l'animal. La tête 23 adopte ici la forme d'un tube cylindrique dont la partie proximale 26 est obturée par le fond 28 et dont la partie distale 27, qui forme l'arête tranchante 25, comporte l'orifice ouvert 29. L'arête tranchante 25 est également circulaire. On a ainsi un alésage aveugle à l'intérieur de la partie tranchante, servant à recueillir l'échantillon lorsque la tête traverse l'oreille de l'animal.

La partie femelle 3 comporte un organe récepteur de la tige 22, et la plaque de marquage 30 destinée à constituer une étiquette d'identification. Le conduit central 31 est apte à recevoir la tête 23 et en partie la tige 22 lors de la pose de la boucle d'oreille 1. Le conduit 31 est associé au conteneur d'échantillon 32, de forme générale cylindrique, pouvant comporter un méplat 40. Le conteneur d'échantillon 32 est réalisé en polyméthylméthacrylate (Perspex®). Il est transparent au niveau de ses parois latérales 37. Il est placé dans le prolongement axial du conduit 31. Le conteneur 32 a, à son extrémité proximale 35, la première ouverture 33 apte à recevoir la tête 23 de la tige 22 lors de la pose de la boucle d'oreille 1. Le conteneur 32 comporte à son extrémité distale 36, la seconde ouverture 34 donnant accès à l'espace intérieur 39 dudit conteneur d'échantillon.

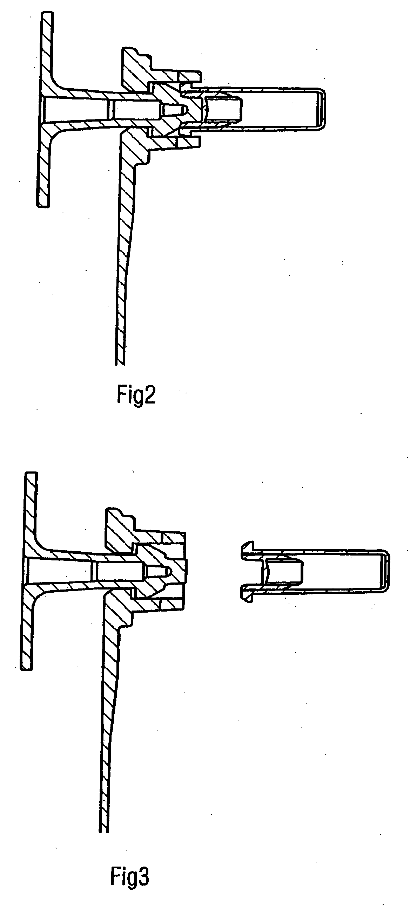

L'orifice 29 de la partie distale 27 de la tête 23 est placé en position coaxiale vis-à-vis du conduit central 31 et également vis-à-vis du conteneur d'échantillon 32. La seconde ouverture 34 du conteneur d'échantillon 32 et l'orifice 29 ont une surface approximativement identique. La paroi interne de l'extrémité proximale 35 du conteneur 32 et la paroi externe de la partie distale 27 de la tête 23 ont une conformation complémentaire de sorte que ladite extrémité proximale du conteneur et ladite partie distale de la tête sont aptes à s'emboîter avec un ajustement parfait, comme on le voit par exemple sur les figures 2 et 3.

Le conteneur d'échantillon 32 est détachable de la partie femelle 3. Une fois que la tête 23 a été introduite dans la première ouverture 33 du conteneur d'échantillon 32, l'ensemble constitué de ladite tête et dudit conteneur d'échantillon se détache de la boucle d'oreille 1 qui vient d'être appliquée sur l'oreille, et constitue un dispositif de conservation d'échantillon selon l'invention, qui peut être stocké et ultérieurement soumis à un traitement.

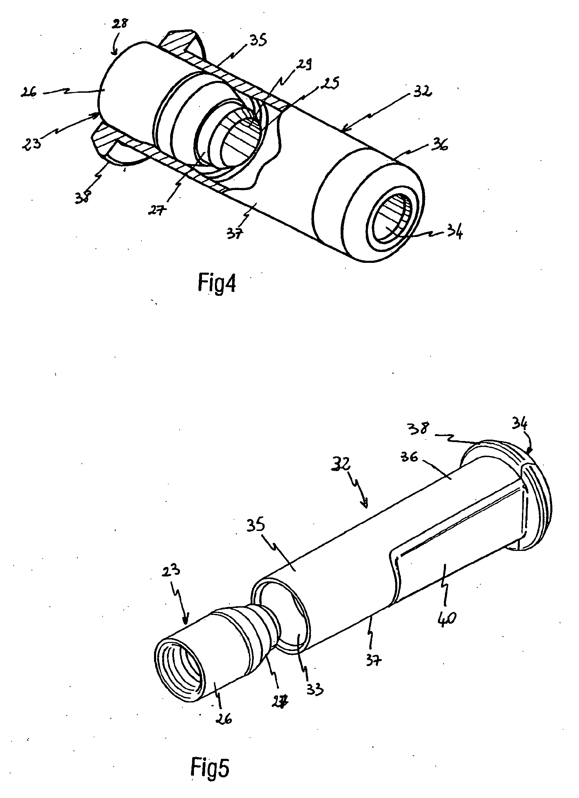

Le conteneur 32 comporte la collerette 38 qui constitue un moyen de fixation dudit conteneur à un tube de protection 41. Elle est ménagée sur la paroi externe du conteneur 32, à son extrémité proximale (fig. 4) ou distale (fig. 5). Elle maintient le conteneur 32 avec le tube de protection 41 par suspension en appui sur l'épaulement 44 ménagé sur la paroi interne du tube 41, ce qui permet une protection parfaitement hermétique du conteneur d'échantillon à l'intérieur du tube.

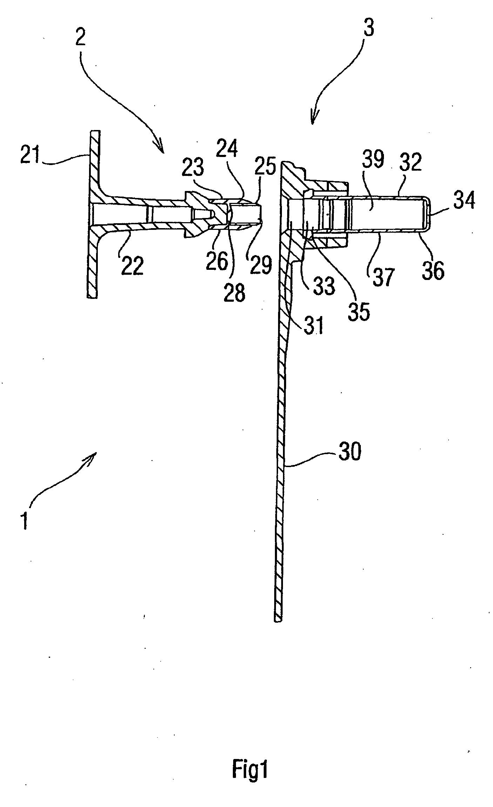

Les figures 1, 2 et 3 illustrent différentes étapes de la pose d'une boucle d'oreille au cours de laquelle la tête 23 et le conteneur d'échantillon 32 sont assemblés puis éjectés de celle-ci.

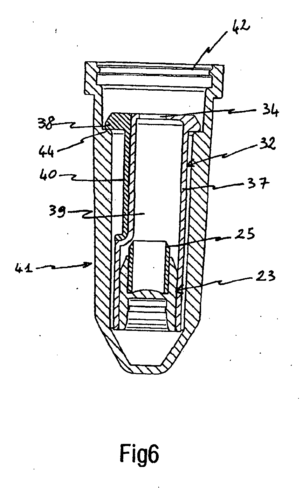

La figure 6 illustre le mode de conservation d'un échantillon de tissus à l'aide du dispositif décrit ci-dessus, comprenant le tube de protection 41, de type tube d'Ependorf, fermé par son couvercle 42, renfermant le conteneur 32 en appui sur l'épaulement 44, avec la tête 23 dans laquelle est logé l'échantillon (non représenté), et éventuellement des composés chimiques ou biologiques (non représentés).

Les différents éléments de la présente invention compris dans la description, les revendications et/ou les dessins joints peuvent être importants pour réaliser les différentes formes de l'invention, telles que définies par les revendications suivantes.

## Revendications

1. Boucle d'oreille (1) pour identifier un animal, comprenant une partie mâle (2) et une partie femelle (3) destinées à être assemblées par emboîtement irréversible de part et d'autre de l'oreille dudit animal,
- ladite partie mâle comprenant une base (21) et une tige (22) constituant une extension de ladite base, ladite tige possédant une tête (23) amovible dont la partie distale (27) est creuse et est dotée d'une arête tranchante (25) apte à sectionner un échantillon de matière biologique lorsque ladite tête perfore l'oreille de l'animal,
- ladite partie femelle comportant un conduit central (31) apte à recevoir ladite tête et au moins partiellement ladite tige lors de la pose de la boucle d'oreille, ledit conduit étant associé à un conteneur d'échantillon (32) détachable placé dans le prolongement axial dudit conduit, ledit conteneur ayant à son extrémité proximale (35) une première ouverture (33) apte à recevoir la tête (23) de ladite tige lors de la pose de la boucle d'oreille,
**caractérisée en ce que** ledit conteneur comporte à son extrémité distale (36) une seconde ouverture (34) consistant en un orifice ouvert donnant accès à l'espace intérieur dudit conteneur d'échantillon.

2. Boucle selon la revendication 1, **caractérisée en ce que** la tête (23) adopte la forme d'une capsule dont la partie proximale (26) est obturée par un fond (28) et dont la partie distale (27) dotée de ladite arête tranchante, est un orifice ouvert (29).

3. Boucle selon la revendication 1 ou 2, **caractérisée en ce que** l'orifice (29) de la partie distale (27) de la tête (23) est placé dans le même axe que le conteneur d'échantillon (32).

4. Boucle selon l'une des revendications précédentes, **caractérisée en ce que** la seconde ouverture (34) du conteneur d'échantillon (32) et l'orifice (29) de la partie distale (27) de la tête (23) ont une surface identique ou approximativement identique.

5. Boucle selon l'une des revendications 1 à 3, **caractérisée en ce que** la seconde ouverture (34) du conteneur d'échantillon (32) a une surface inférieure à celle de l'orifice (29) de la partie distale (27) de la tête (23).

6. Boucle selon l'une quelconque des revendications précédentes, **caractérisée en ce que** la paroi interne de l'extrémité proximale (35) du conteneur (32) et la paroi externe de la partie distale (27) de la tête (23) ont une conformation complémentaire de sorte que ladite extrémité proximale du conteneur et ladite partie distale de la tête sont aptes à s'emboîter avec un ajustement parfait.

7. Boucle selon l'une des revendications précédentes, **caractérisée en ce que** la tête (23) adopte la forme d'une capsule cylindrique et l'arête tranchante (25) est circulaire.

8. Boucle selon l'une des revendications précédentes **caractérisée en ce que** le conteneur d'échantillon (32) adopte la forme générale d'un cylindre comprenant ladite première ouverture (33) à son extrémité proximale (35) et ladite seconde ouverture (34) à son extrémité distale (36).

9. Boucle selon l'une des revendications précédentes, **caractérisée en ce que** la paroi externe du conteneur d'échantillon (32) comporte un méplat (40) apte à recevoir ou à servir de support à un marquage d'identifiant.

10. Boucle selon l'une des revendications précédentes, **caractérisée en ce que** le conteneur d'échantillon (32) est transparent au moins au niveau de ses parois latérales (37).

11. Boucle selon l'une des revendications précédentes, **caractérisée en ce que** le conteneur d'échantillon (32) est réalisée en une ou plusieurs matières plastiques sélectionnées dans le groupe comprenant le polyméthylméthacrylate, le polycarbonate, le polypropylène, le polyéthylène, le polyméthylpentène, le polyéthylène téréphtalique, le polystyrène, le chlorure de polyvinyle et le polyvinyltoluène.

12. Dispositif de conservation d'un échantillon biologique prélevé sur l'oreille d'un animal lors de la pose d'une boucle d'identification selon l'un des revendications précédentes, ledit dispositif comprenant un conteneur d'échantillon (32) comportant à son extrémité proximale (35) une première ouverture (33) obturée par la partie distale d'une tête creuse (23) contenant ledit échantillon biologique, ladite extrémité proximale du conteneur et ladite partie distale de la tête étant emboîtées avec un ajustement parfait, ledit dispositif étant **caractérisé en ce qu'**il comprend un tube de protection (41) doté d'un couvercle (42) destiné à obturer le col (43) dudit tube, ledit tube étant apte à conserver le conteneur d'échantillon (32) dans un espace clos, et **en ce que** ledit conteneur d'échantillon (32) comprend à son extrémité distale (36) une seconde ouverture (34) consistant en un orifice ouvert donnant accès à l'espace intérieur dudit conteneur d'échantillon.

13. Dispositif selon la revendication 12, **caractérisé en ce qu'**il comporte des moyens de maintien en suspension du conteneur d'échantillon (32) à une hauteur intermédiaire dans le tube de protection (41).

14. Dispositif selon la revendication précédente, **caractérisé en ce que** lesdits moyens de maintien comprennent une collerette (38) ménagée sur la paroi externe du conteneur (32), et un épaulement (44) ménagé sur la paroi interne du tube de protection (41), ladite collerette prenant appui sur ledit épaulement.

15. Dispositif selon la revendication précédente, **caractérisé en ce que** la collerette (38) est ménagée à l'extrémité distale (36) de la paroi externe (37) du conteneur d'échantillon (32).

16. Dispositif selon l'une des revendications 12 à 15, **caractérisé en ce que** le tube de protection (41) contient au moins un premier composé chimique ou biochimique utile pour le traitement de l'échantillon.

17. Dispositif selon l'une des revendications 12 à 16, **caractérisé en ce que** la tête creuse (23) contient au moins un deuxième composé chimique ou biochimique utile pour le traitement de l'échantillon.

18. Dispositif selon la revendication 16 ou 17, **caractérisé en ce que** lesdits au moins un premier et deuxième composés chimiques ou biochimiques sont choisis parmi les agents desséchants, les inhibiteurs de protéases, les enzymes, les fragments d'ADN, les fragments d'ARN.

19. Dispositif selon l'une des revendications 12 à 18, **caractérisé en ce que** le tube de protection (41) a une conformation externe identique à celle d'un tube standard de laboratoire.

## Patentansprüche

1. Ohrmarke (1) zur Kennzeichnung eines Tieres, wobei sie ein Steckerelement (2) und ein Steckbuchsenelement (3) umfasst, welche dazu bestimmt sind, durch einen unumkehrbaren Einrastvorgang derart zusammengefügt zu werden, dass sie sich beiderseits des Ohres des Tieres befinden,
- wobei das Steckerelement eine Basis (21) und einen Schaft (22) umfasst, der eine Verlängerung der Basis darstellt, wobei der Schaft eine abnehmbare Spitze (23) besitzt, deren distaler Abschnitt (27) hohl ist und mit einer Schneidkante (25) versehen ist, welche dazu befähigt ist, eine Probe eines biologischen Materials zu durchtrennen, wenn die Spitze das Ohr des Tieres durchbohrt,
- wobei das Steckbuchsenelement eine mittige Führung (31) aufweist, die dazu geeignet ist, die Spitze und mindestens teilweise den Schaft aufzunehmen, wenn die Ohrmarke angebracht wird, wobei die Führung mit einem abtrennbaren Probenbehälter (32) in Verbindung steht, welcher in der axialen Verlängerung der Führung angeordnet ist, wobei der Behälter an seinem proximalen Ende (35) eine erste Öffnung (33) aufweist, die dazu geeignet ist, die Spitze (23) des Schaftes aufzunehmen, wenn die Ohrmarke angebracht wird,
**dadurch gekennzeichnet, dass** der Behälter an seinem distalen Ende (36) eine zweite Öffnung (34) aufweist, die aus einem unverschlossenen Loch besteht, welches einen Zugang zum Innenraum des Probenbehälters gewährt.

2. Marke nach Anspruch 1, **dadurch gekennzeichnet, dass** die Spitze (23) die Form einer Kapsel hat, deren proximaler Abschnitt (26) durch ein Bodenstück (28) abgedichtet ist und deren distaler Abschnitt (27), welcher mit der Schneidkante versehen ist, ein unverschlossenes Loch (29) ist.

3. Marke nach Anspruch 1 oder 2, **dadurch gekennzeichnet, dass** das Loch (29) des distalen Abschnitts (27) der Spitze (23) in derselben Achse wie der Probenbehälter (32) angeordnet ist.

4. Marke nach einem der vorhergehenden Ansprüche, **dadurch gekennzeichnet, dass** die zweite Öffnung (34) des Probenbehälters (32) und das Loch (29) des distalen Abschnitts (27) der Spitze (23) eine vollkommen gleichartige oder näherungsweise gleichartige Oberfläche haben.

5. Marke nach einem der Ansprüche 1 bis 3, **dadurch gekennzeichnet, dass** die zweite Öffnung (34) des Probenbehälters (32) eine Fläche hat, die kleiner als diejenige des Lochs (29) des distalen Anschnitts (27) der Spitze (23) ist.

6. Marke nach einem beliebigen der vorhergehenden Ansprüche, **dadurch gekennzeichnet, dass** die Innenwand des proximalen Endes (35) des Behälters (32) und die Außenwand des distalen Abschnitts (27) der Spitze (23) eine komplementäre Formgebung aufweisen, sodass das proximale Ende des Behälters und der distale Abschnitt der Spitze vollkommen passend ineinander gesteckt werden können.

7. Marke nach einem der vorhergehenden Ansprüche, **dadurch gekennzeichnet, dass** die Spitze (23) die Form einer zylindrischen Kapsel hat und die Schneidkante (25) eine Kreisform beschreibt.

8. Marke nach einem der vorhergehenden Ansprüche, **dadurch gekennzeichnet, dass** der Probenbehälter (32) die allgemeine Form eines Zylinders hat, welcher an seinem proximalen Ende (35) die erste Öffnung (33) und an seinem distalen Ende (36) die zweite Öffnung (34) umfasst.

9. Marke nach einem der vorhergehenden Ansprüche, **dadurch gekennzeichnet, dass** die Außenwand des Probenbehälters (32) eine Abflachung (40) aufweist, die dazu geeignet ist, eine Kennzeichnungsmarkierung aufzunehmen oder als Träger für eine solche zu dienen.

10. Marke nach einem der vorhergehenden Ansprüche, **dadurch gekennzeichnet, dass** der Probenbehälter (32) zumindest im Bereich seiner Seitenwände (37) durchsichtig ist.

11. Marke nach einem der vorhergehenden Ansprüche, **dadurch gekennzeichnet, dass** der Probenbehälter (32) aus einem oder mehreren Kunststoffen besteht, die aus der Gruppe ausgewählt sind, welche Polymethylmethacrylat, Polycarbonat, Polypropylen, Polyethylen, Pölymethylpenten, Polyethylenterephthalat, Polystyrol, Polyvinylchlorid und Polyvinyltoluol umfasst.

12. Vorrichtung zur Aufbewahrung einer biologischen Probe, die beim Anbringen einer Kennzeichnungsmarke gemäß einem der vorhergehenden Ansprüche aus dem Ohr eines Tieres genommen wurde, wobei die Vorrichtung einen Probenbehälter (32) umfasst, der an seinem proximalen Ende (35) eine erste Öffnung (33) aufweist, die durch den distalen Abschnitt einer hohlen Spitze (23), welche die biologische Probe enthält, abgedichtet wird, wobei das proximale Ende des Behälters und der distale Abschnitt der Spitze vollkommen passend ineinander gesteckt sind, wobei die Vorrichtung **dadurch gekennzeichnet ist, dass** sie ein Schutzröhrchen (41) umfasst, das mit einem Deckel (42) versehen ist, welcher dazu bestimmt ist, die Halsöffnung (43) des Röhrchens abzudichten, wobei das Röhrchen dazu befähigt ist, den Probenbehälter (32) in einem abgeschlossenen Raum zu verwahren, und dadurch, dass der Probenbehälter (32) an seinem distalen Ende (36) eine zweite Öffnung (34) umfasst, die aus einem unverschlossenen Loch besteht, welches einen Zugang zum Innenraum des Probenbehälters gewährt.

13. Vorrichtung nach Anspruch 12, **dadurch gekennzeichnet, dass** sie Mittel aufweist, die dazu dienen, den Probenbehälter (32) innerhalb des Schutzröhrchens (41) auf einer mittleren Höhe zu halten.

14. Vorrichtung nach dem vorhergehenden Anspruch, **dadurch gekennzeichnet, dass** die Haltemittel einen Flansch (38), der an der Außenwand des Behälters (32) vorgesehen ist, und einen Ansatz (44), der an der Innenwand des Schutzröhrchens (41) vorgesehen ist, umfassen, wobei der Flansch sich auf dem Ansatz abstützt.

15. Vorrichtung nach dem vorhergehenden Anspruch, **dadurch gekennzeichnet, dass** der Flansch (38) am distalen Ende (36) der Außenwand (37) des Probenbehälters (32) vorgesehen ist.

16. Vorrichtung nach einem der Ansprüche 12 bis 15, **dadurch gekennzeichnet, dass** das Schutzröhrchen (41) mindestens eine erste chemische oder biochemische Verbindung enthält, die zur Behandlung der Probe von Nutzen ist.

17. Vorrichtung nach einem der Ansprüche 12 bis 16, **dadurch gekennzeichnet, dass** die hohle Spitze (23) mindestens eine zweite chemische oder biochemische Verbindung enthält, die zur Behandlung der Probe von Nutzen ist.

18. Vorrichtung nach Anspruch 16 oder 17, **dadurch gekennzeichnet, dass** die ersten und zweiten chemischen oder biochemischen Verbindungen, von denen jeweils mindestens eine vorliegt, aus den Trockenmitteln, den Proteasehemmern, den Enzymen, den DNA-Fragmenten, den RNA-Fragmenten ausgewählt sind.

19. Vorrichtung nach einem der Ansprüche 12 bis 18, **dadurch gekennzeichnet, dass** das Schutzröhrchen (41) eine äußere Formgebung aufweist, die mit derjenigen eines Standard-Laborröhrchens identisch ist.

## Claims

1. Ear tag (1) for identifying an animal, comprising a male part (2) and a female part (3) that are configured to be assembled by irreversible interlocking on both sides of said animal's ear,
- said male part comprising a base (21) and a stem (22) constituting an extension of said base, said stem having a removable head (23) whose distal part (27) is hollow and is equipped with a cutting edge (25) that can cut a sample of biological material when said head perforates the animal's ear,
- said female part comprising a central tube (31) that can receive said head and at least partially said stem during the application of the ear tag, said tube being combined with a detachable sample container (32) that is placed in the axial extension of said tube, said container having at its proximal end (35) a first opening (33) that can receive the head (23) of said stem during the application operation of the ear tag,
**characterized in that** said container comprises at its distal end (36) a second opening (34) that is an open orifice providing access to the inside space of said sample container.

2. Tag according to claim 1, **characterized in that** the head (23) assumes the shape of a capsule whose proximal part (26) is sealed by a base (28) and whose distal part (27) that is equipped with said cutting edge is an open orifice (29).

3. Tag according to claim 1 or 2, **characterized in that** the orifice (29) of the distal part (27) of the head (23) is placed in the same axis as the sample container (32).

4. Tag according to one of the preceding claims, **characterized in that** the second opening (34) of the sample container (32) and the orifice (29) of the distal part (27) of the head (23) have an identical or approximately identical surface.

5. Tag according to one of claims 1 to 3, **characterized in that** the second opening (34) of the sample container (32) has a surface that is inferior to that of the orifice (29) of the distal part (27) of the head (23).

6. Tag according to any of the preceding claims, **characterized in that** the inside wall of the proximal end (35) of the container (32) and the outside wall of the distal part (27) of the head (23) have a complementary shape such that said proximal end of the container and said distal part of the head are able to fit together perfectly.

7. Tag according to one of the preceding claims, **characterized in that** the head (23) assumes the shape of a cylindrical capsule, and the cutting edge (25) is circular.

8. Tag according to one of the preceding claims, **characterized in that** the sample container (32) assumes the general shape of a cylinder that comprises said first opening (33) at its proximal end (35) and said second opening (34) at its distal end (36).

9. Tag according to one of the preceding claims, **characterized in that** the outside wall of the sample container (32) comprises a flat surface (40) that can receive or be used as substrate for an identifying marking.

10. Tag according to one of the preceding claims, **characterized in that** the sample container (32) is transparent at least at its side walls (37).

11. Tag according to one of the preceding claims, **characterized in that** the sample container (32) is made of one or more plastic materials that are selected from the group that comprises polymethyl methacrylate, polycarbonate, polypropylene, polyethylene, polymethylpentene, terephthalic polyethylene, polystyrene, polyvinyl chloride, and polyvinyl toluene.

12. Device for preservation of a biological sample taken from an animal's ear during the application of an identification tag according to one of the preceding claims, said device comprising a sample container (32) that comprises, at its proximal end (35), a first opening (33) that is sealed by the distal part of a hollow head (23) that contains said biological sample, said proximal end of the container and said distal part of the head fitting together perfectly, said device being **characterized in that** it comprises a protection tube (41) that is equipped with a cover (42) that is configured to seal the neck (43) of said tube, said tube being able to preserve the sample container (32) in a closed space, and **in that** said sample container (32) comprises , at its distal end (36), a second opening (34) that is an open orifice providing access to the inside space of said sample container.

13. Device according to claim 12, **characterized in that** it comprises means for holding the sample container (32) in suspension at an intermediate height in the protection tube (41).

14. Device according to the preceding claim, **characterized in that** said holding means comprise a collar (38) that is located on the outside wall of the container (32) and a shoulder (44) that is located on the inside wall of the protection tube (41), said collar resting on said shoulder.

15. Device according to the preceding claim, **characterized in that** the collar (38) is located at the distal end (36) of the outside wall (37) of the sample container (32).

16. Device according to one of claims 12 to 15, **characterized in that** the protection tube (41) contains at least a first chemical or biochemical compound that is useful for the treatment of the sample.

17. Device according to one of claims 12 to 16, **characterized in that** the hollow head (23) contains at least a second chemical or biochemical compound that is useful for the treatment of the sample.

18. Device according to claim 16 or 17, **characterized in that** said at least one first and second chemical or biochemical compounds are selected from among the drying agents, the protease inhibitors, the enzymes, the DNA fragments, and the RNA fragments.

19. Device according to one of claims 12 to 18, **characterized in that** the protection tube (41) has an external shape that is identical to that of a standard laboratory tube.
